# EUROPEAN PATENT APPLICATION

(11) **EP 0 597 296 A2**
(43) Date of publication of application: **18.05.1994**
(21) Application number: 93117056.7
(22) Date of filing: 21.10.1993
(51) Int. Cl.: G06F 12/08

(54) **Cache architecture for high speed memory-to-I/0 data transfers**

(30) Priority: 09.11.1992 US 973866
(71) Applicant: International Business Machines Corporation, Armonk, N.Y. 10504 (US)
(72) Inventor: Arimilli, Ravi Kumar, Round Rock, Texas 78664 (US); Maule, Warren Edward, Austin, Texas 78729 (US); Shippy, David James, Austin, Texas 78759 (US); Siegel, David William, Austin, Texas 78727 (US)
(74) Representative: Burt, Roger James, Dr.

(57) **Abstract**

Computer architecture and method of control for accomplishing low speed memory to high speed I/O data transfers. An I/O cache is connected between the memory data bus and a system I/O data bus, and is responsive to a storage control unit which manages data transfers over the system I/O bus. The relatively lower speed of the system memory is offset by the larger size of the memory data bus in comparison to the system I/O data bus. The I/O cache is used to prefetch memory data during read cycles, which prefetch operates in concurrence with the transfer of previously prefetched data from the I/O cache to I/O control units on the system I/O data bus. During the writing of data from I/O to system memory, the I/O cache buffers memory access interferences initiated by the processor. The invention permits the use of a conventional and relatively slow main memory in conjunction with a high speed processor and high speed I/O system.

## Description

The present invention relates to a computer architecture for performing high speed transfers of data directly between the computer main memory and the computer I/O system.

Computer architectures and integrated circuit fabrication processes used to create the computer processors have evolved to a stage where the processors are on a consistent basis much faster than the DRAM devices conventionally used in the computer main memory. As a consequence, contemporary computer designs used high speed memories known as caches to buffer data between the low speed main memory and the high speed processor. An integral aspect of that architecture involves the use of large memory data buses, for example ones capable of 256 bits, to allow the simultaneous transfer of multiple words between the processor/cache and main memory. A representative example of the architecture exists in the RISC Systems/6000 workstation product line commercially available from IBM Corporation.

In the context of most prior art architectures, the transfers of data between main memory and input/output (I/O) devices were accomplished under the control of direct memory access (DMA) devices. Common practice involved the connection of the I/O device to the system memory through the DMA device, wherein the DMA device resided directly on the memory data bus. In this configuration, the DMA device contended with the processor for use of the memory data bus. The unfortunate consequence of such competition for the memory data bus was the fact that the relatively slow memory was now communicating both with the processor and the I/O system.

This contention for access to main memory has in recent time become a major impediment to the operation of the computer systems. The exacerbation is attributable to recent changes to the I/O side of the computer system, wherein the use of clustered workstations, networks, and multiple I/O channels has resulted in I/O channel designs with materially greater data handling rates. Such high speed I/O systems have become major competitors for processor access to the comparatively slow main memory. Therefore, conventional direct memory access architectures are no longer suitable to interface a slow memory to both a high speed processor and a high speed I/O system.

In accordance with the present invention there is now provided a system for transferring data between computer main memory and computer I/O channels, comprising: an I/O bus means for transferring data of n bits from or to a selected I/O channel; a memory bus means for transferring data of m bits, where m is greater than n, from or to the computer memory; an I/O cache means for selectively storing data subject to transfer between the I/O bus means and the memory bus means; and a storage control means for regulating transfers of data through the I/O cache means in increments of bits corresponding to the sizes of their respective I/O bus means and memory bus means.

Viewing the present invention from another aspect, there is now provided a method of transferring data between a computer memory and computer I/O channels, comprising the steps of: transferring data over an I/O bus between an I/O cache and an I/O channel at a first clock rate; and transferring data over a memory bus between the computer memory and the I/O cache at a second clock rate, the second rate being less than the first.

Viewing the present invention from yet another aspect, there is now provided a computer system comprising: a computer memory connected by a memory data bus to a data cache for use by a processor and connected to an I/O system bus serving multiple channels; an I/O cache connected between the memory data bus and an I/O system bus; and means for regulating the transfer of data in m bit units over the memory data bus and n bit units over the I/O system bus, where m is greater than n.

The present invention defines a computer architecture and method of operation suitable to interface a relatively slow main memory to both a high speed processor and a high speed I/O system. The interface to the processor employs the conventional use of data and instruction caches connected to an extended memory data bus. In contrast to the conventional use of a direct memory access device for the I/O system, the present invention utilizes an I/O cache interface between the memory data bus and a system I/O (SIO) data bus, all responsive to a storage control unit. The I/O cache is characterized in having resources to read and write to the extended size memory data bus, at a slower speed of the main memory, and to communicate by reading and writing to a system I/O bus, of a size smaller than the memory data bus but at a rate consistent with the higher speed of the system I/O data bus. The I/O cache and related storage control unit provide a method of operation whereby prefetching can be accomplished through a time concurrent but path independent communication from the I/O cache to both tile memory data bus and system I/O data bus. A preferred implementation involves an I/O cache capable of concurrently communicating with the memory data bus and the system I/O data bus in response to a storage control unit which manages the processor access compatible interface to the memory data bus and the higher speed, multiple channel access to the system I/O data bus.

These and other features of the invention will be more clearly understood and further appreciated upon considering the detailed description which follows.

A preferred embodiment of the present invention will now be described with reference to the accompanying drawings in which:
Figure 1 is a schematic block diagram of the computer system architecture.
Figure 2 is a schematic block diagram of the I/O cache and storage control unit architecture.
Figures 3-6 schematically illustrate by timing diagram the various modes of operation of a preferred embodiment.

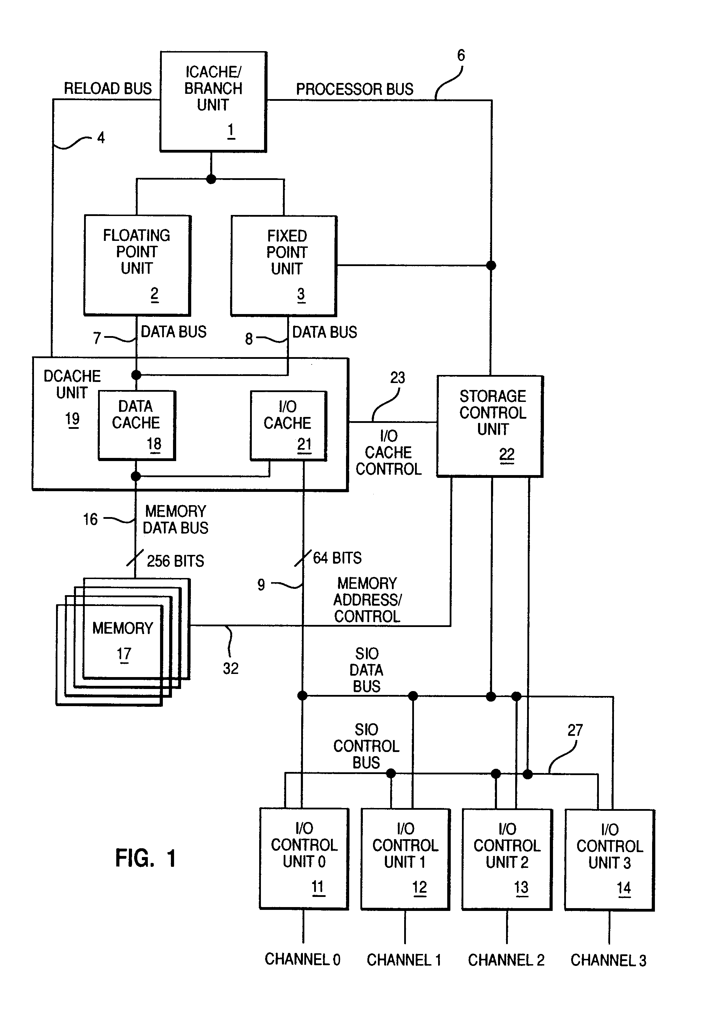

Figure 1 illustrates an architectural implementation of the present invention at the computer system level. The illustrated processor is composed of icache/branch unit 1, floating point unit 2, and fixed point unit 3, each of which may be in multiples based upon contemporary superscalar implementations. Reload bus 4, processor bus 6, floating point unit data bus 7 and fixed point unit data bus 8 operate at the high clock rate of the processor. The high clock rate of the processor also characterizes system I/O (SIO) data bus 9 as exists in new computer systems. This speed characteristic of the SIO data bus is consistent with the fact that the I/O system has evolved in size and speed, exemplified by the presence of multiple I/O channel control units 11, 12, 13 and 14. Where as in the past a workstation would have only one I/O control unit interfacing the processor to the I/O channel, such as the IBM microchannel, contemporary designs will use multiple channels which are individually capable of high speed data communication. For example, each channel 0-3 could contain multiple graphics or fibro-optical cable adapter cards. In contrast, memory data bus 16 is constrained by the relatively slow clock rate of the DRAM type devices in the large main computer memory 17. The clock rate of memory data bus 16 is therefore a submultiple of the processor clock rate, e.g. divided by 8 or 16. Contemporary workstations routinely include a data cache 18 between the processor unit data buses and the memory data bus, with associated data cache unit coherency control logic, generally 19, to allow the processor unit operation at the high clock rate.

The present invention introduces apparatus and methods suitable to interface a high speed I/O system to a computer characterized by a high speed processor but relatively slow speed memory. In one aspect it involves the addition of a bi-directional I/O cache 21 between memory data bus 16 and SIO data bus 9. Bi-directional cache 21 is shared among multiple I/O control units 11-14. In another aspect, it involves the use of an extended width memory data bus in conjunction with a relatively smaller SIO data bus. In a third aspect it involves a storage control unit 22 suitable to manage access to the memory data bus and use of the SIO data bus so as to facilitate prefetching of memory data. As to the latter, reading or writing of memory data is accomplished on the 256 bit memory data bus 16 at the relatively slow speed of memory 17 while at the same time previously fetched data is read from or written to I/O cache 21 over high speed 64 bit SIO data bus 9. The difference in size between the memory data bus and SIO data bus minimizes the contention which would otherwise exist on memory data bus 16, given that both high speed SIO data bus 9 and high speed processor buses 4, 7 and 8 compete for access to memory 17.

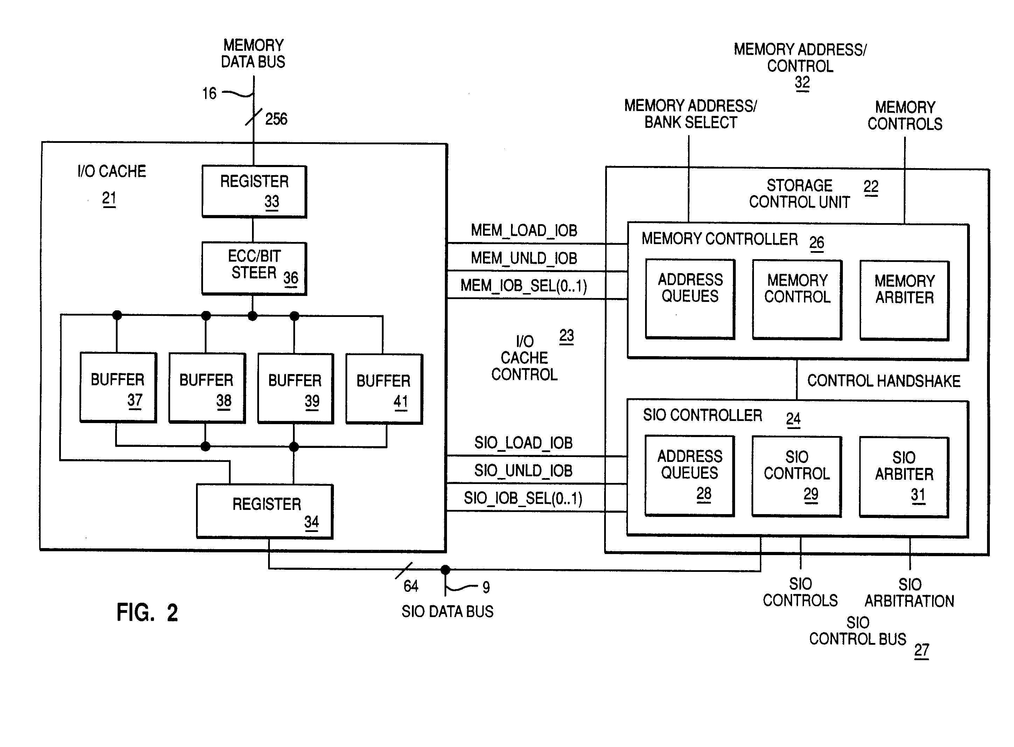

Storage control unit 22 manages the data transfer between the computer memory and I/O system in a manner analogous to a direct memory access (DMA) system. Figure 2 illustrates the functional elements which comprise I/O cache 21 and storage control unit 22, together with the I/O cache control lines 23 connecting the two. Storage control unit 22 includes SIO controller 24 and memory controller 26. SIO controller 24 regulates the SIO bus 27 protocol, the SIO bus arbitration, and the loading and unloading of data into and out of the data buffers in I/O cache 21 over SIO data bus 9. These functions are performed in SIO controller 24 using address queue circuits 28, SIO control circuits 29, and SIO arbitration circuits 31. Memory controller 26 in storage control unit 22 manages the memory data bus protocol, the DRAM address translation and bank select, and the load and unload of data on to and out of the buffers in I/O cache 21 over memory data bus 16. Memory address/control lines 32 communicate directly with main memory 17 (Figure 1). The functional blocks internal to memory controller 26 operate analogous to their counterparts in SIO controller 24.

I/O cache 21 has registers 33 and 34 connected, respectively, to memory data bus 16 and SIO data bus 9. Also included is error correction code (ECC)/bit steering logic 36 to manage selective conversion between the 8 word wide memory data bus (32 bits per word) to the 2 word wide SIO data bus. As embodied, I/O cache 21 uses four 64 byte I/O buffers 37, 38, 39 and 41 to store data prefetched from the memory data bus, or to accumulate SIO data bus data during busy periods of the memory data bus.

The management of cache coherency between data cache 18 (Fig. 1) and memory 17 is accomplished in Dcache unit 19 following a procedure, whereby, no action is taken in data cache 18 if a write operation from the I/O system through I/O cache 21 addresses a memory 17 range different from that in data cache 18. On the other hand, if during such I/O write operation the addresses being written in memory 17 overlap with those in data cache 18, a conventional flush of data cache 18 is performed after the I/O write cycle to establish data cache 18 to memory 17 coherence. Consistency between the data read from memory 17 into I/O cache 21 and the data in data cache 18, subject to processor changes, is maintained by defining a memory read address range for the I/O system distinct from the address range subject to processor manipulation.

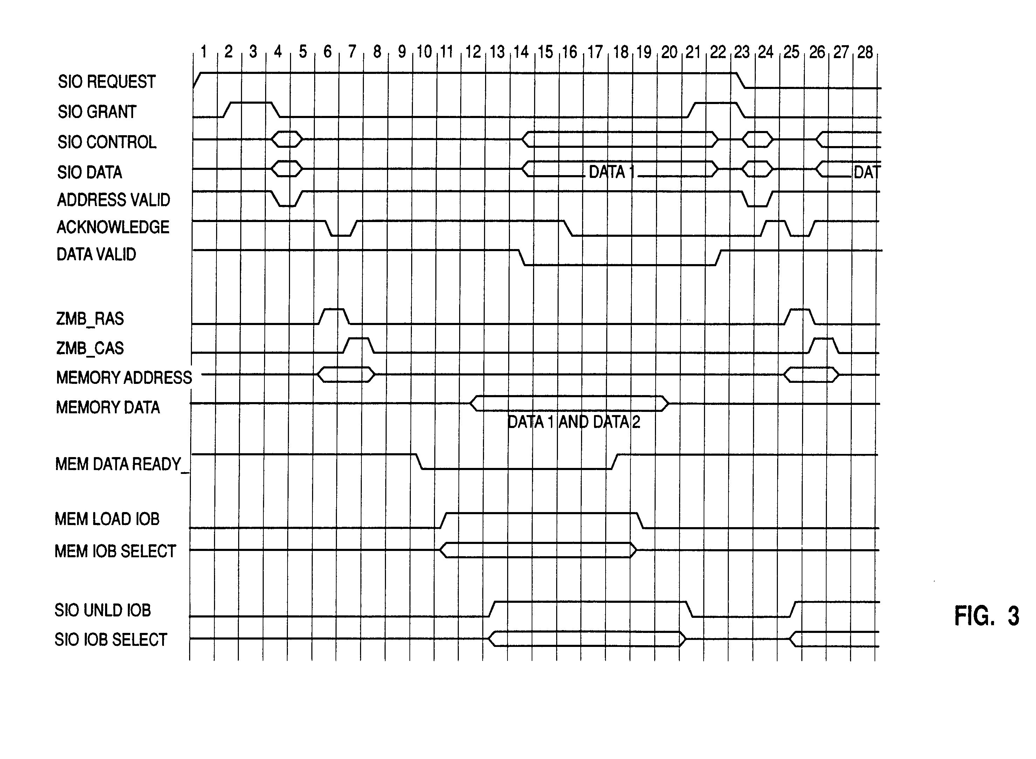

In operation, data is moved from memory 17 to the multiplicity of I/O control units 11-14 of the I/O system via 64 bit wide SIO data bus 9. The timing diagram in Figure 3 illustrates a memory prefetch operation. As shown, an input/output control activates a bus request. When the SIO data bus is available, the storage control unit 22 activates the grant signal. Then the input/output control unit places a memory prefetch command on SIO control bus 27, places a 32 bit real address on SIO data bus 9 and activates the address valid signal. SIO controller 24 (Figure 2) in storage control unit 22 receives the address and allocates two buffers from I/O cache 21 for storing up to 128 bytes from memory. SIO controller 24 uses a round-robin buffer selection scheme. The first available buffer is always selected. SIO controller 24 then requests memory controller 26 in storage control unit 22 to pass the real address and buffer identification to be used for the memory read operation. Memory controller 26 sends the memory DRAM address and bank select to memory array 17 over memory address/control lines 32. The memory controller then waits for the data, indicated by a memory data ready signal. Upon receiving the data ready signal, memory controller 26 activates the memory load and buffer ID signals. After loading the first 64 bytes into the first selected buffer, the memory controller in 26 increments the buffer identification to load the next successive buffer. As soon as memory controller 26 has started to load the first 64 bytes into the first buffer, SIO controller 24 activates an I/O cache unload signal and selects 8 cycles (64 bytes) to unload the data over SIO bus 9 to the selected I/O control unit. Thereupon, SIO controller 24 also activates a data valid signal on SIO control bus 27 to inform the selected I/O control unit that the memory data is available.

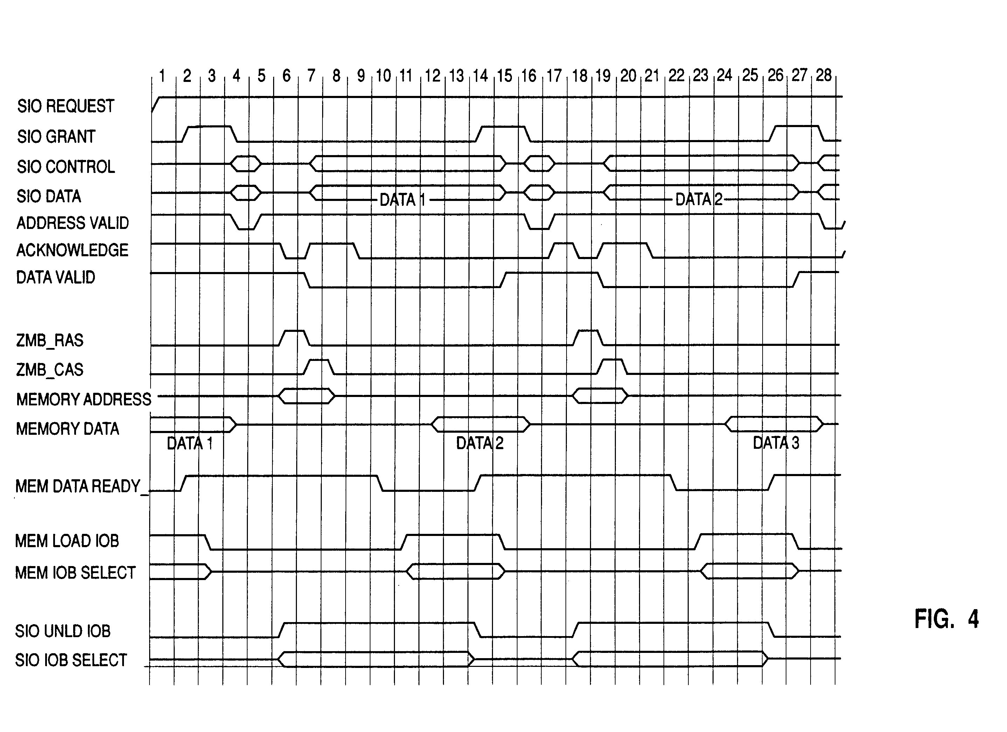

To receive the next 64 bytes, the input/output control unit arbitrates for the SIO data bus, and when acquired, places a memory next prefetch command on SIO control bus 27. Since the data is already in the buffer of I/O cache 21, SIO controller 24 immediately begins an unload of the data onto SIO data bus 9 upon receiving the SIO unload signal and the SIO buffer select signals. Concurrent therewith, the SIO controller 24 places a request signal to memory controller 26 for the next sequential 64 bytes of data. Thus, when the selected input/output control unit requests the next 64 bytes, SIO controller 24 can immediately unload the data from the selected buffer onto SIO data bus 9. The waveforms in Figure 4 illustrate multiple memory next prefetch operations in which 64 bytes are unloaded onto SIO data bus 9 for each next prefetch command and in parallel with the next 64 bytes being fetched from memory 17.

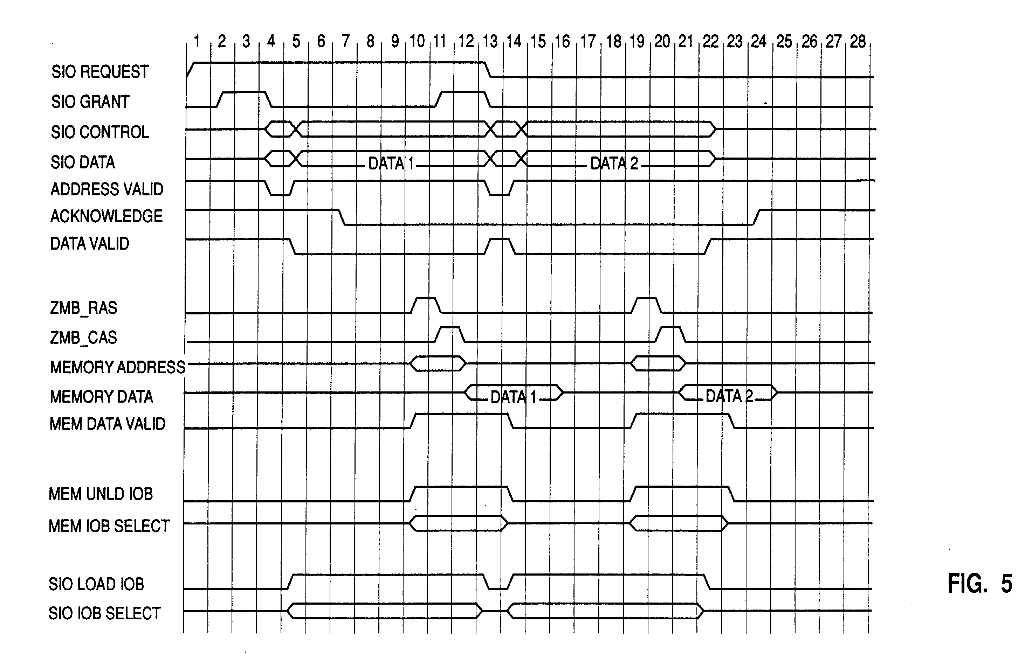

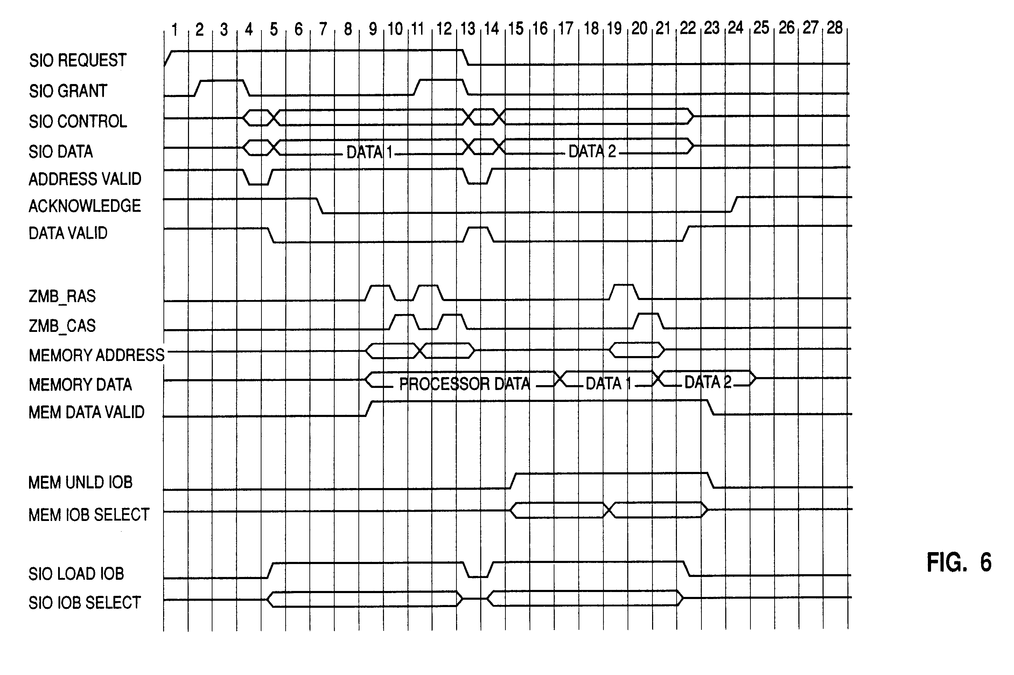

The movement of data from a device connected to an I/O control unit to memory 17 is performed using 64 byte lines following a write procedure commencing in the SIO bus network. Representative timing diagram signals are depicted in Figure 5 for back-to-back memory write operations under the presumption of no processor interference during the I/O system to memory write operation. Figure 6 illustrates the corresponding timing diagram for back-to-back memory write operations with processor interference. The diagrams show that 64 byte lines are sent on the SIO data bus 9 and subsequently unloaded into memory 17 via memory data bus 16. In the Figure 6 example, where the processor interferes during the transfer of data from the I/O system to memory, the interference is hidden from the I/O control units because the data is buffered in I/O cache 21 until memory data bus 16 is available. Therefore, memory use by the processor does not inhibit the ability of I/O control units to continuously write over the SIO data bus 9.

In summary, the present invention provides by way of I/O cache 21 and storage control unit 22 resources to prefetch data during a DMA type memory read request by the I/O system. Furthermore, because of the bus size differential between the memory data bus and the SIO data bus, for large and sequential accesses of data from memory the transfers to the I/O system can be continuous notwithstanding the relatively lower clock rate of the memory data bus in comparison to the SIO data bus. Additionally, memory bus busy states introduced by processor access of memory during I/O system memory read intervals are hidden from the I/O control units by the buffering of cache lines in I/O cache 21. Thereby, a high speed processor and high speed I/O system can coexist in a computer using conventional speed volatile memory arrays configured from DRAM devices.

## Claims

1. A system for transferring data between computer main memory and computer I/O channels, comprising:
an I/O bus means for transferring data of n bits from or to a selected I/O channel;
a memory bus means for transferring data of m bits, where m is greater than n, from or to the computer memory;
an I/O cache means for selectively storing data subject to transfer between the I/O bus means and the memory bus means; and
a storage control means for regulating transfers of data through the I/O cache means in increments of bits corresponding to the sizes of their respective I/O bus means and memory bus means.

2. A system as claimed in claim 1, wherein the data transfers over the I/O bus means are performed at a higher clock rate than the data transfers over the memory bus means.

3. A system as claimed in claim 2, wherein data transfers between the I/O cache means and the I/O bus means, and between the I/O cache means and the memory bus means, overlap in time.

4. A system as claimed in claim 3, wherein the I/O cache means is materially smaller in memory capacity but faster in speed than the computer memory.

5. A system as claimed in claim 4, wherein multiple I/O control units are connected to the I/O bus means and share access to the I/O cache means.

6. A method of transferring data between a computer memory and computer I/O channels, comprising the steps of:
transferring data over an I/O bus between an I/O cache and an I/O channel at a first clock rate; and
transferring data over a memory bus between the computer memory and the I/O cache at a second clock rate, the second rate being less than the first.

7. A method as claimed in claim 6, wherein the number of data bits transferred per clock cycle over the memory bus is greater than the number of data bits transferred per clock cycle over the I/O bus.

8. A method as claimed in claim 7, wherein the transfers of data over the memory bus and over the I/O bus overlap in time.

9. A computer system comprising: a computer memory connected by a memory data bus to a data cache for use by a processor and connected to an I/O system bus serving multiple channels;
an I/O cache connected between the memory data bus and an I/O system bus; and
means for regulating the transfer of data in m bit units over the memory data bus and n bit units over the I/O system bus, where m is greater than n.

10. A system as claimed in claim 9, wherein the data transfers over the I/O system bus are performed at a higher clock rate than the data transfers over the memory data bus.
